# EUROPEAN PATENT SPECIFICATION

(11) **EP 2 744 658 B1**
(45) Date of publication and mention of the grant of the patent: **16.10.2019**
(21) Application number: 12823610.6
(22) Date of filing: 15.08.2012
(51) Int. Cl.: B32B 27/32, B32B 7/12, B32B 25/14, B32B 27/30, B32B 27/36, B32B 27/40

(54) **MULTILAYER POLYMER STRUCTURES**
MEHRSCHICHTIGE POLYMERSTRUKTUREN
STRUCTURES POLYMÈRES MULTICOUCHES

(30) Priority: 17.08.2011 US 201161524473 P; 13.04.2012 US 201261623767 P
(43) Date of publication of application: 25.06.2014
(73) Proprietor: Arkema France, 92700 Colombes (FR)
(72) Inventor: CRABB, Charles C., Royersford, Pennsylvania 19468 (US); LACOCK, Steven B., Perkiomenville, PA 18074 (US); RICHARDS, Thomas H., New Britain, Pennsylvania 18932 (US); MEHLMANN, Florence, King of Prussia, Pennsylvania 19406 (US)
(86) International application number: PCT/US2012/050835
(87) International publication number: WO 2013/025739

(56) References cited:
- US-A- 4 386 188
- US-A- 5 310 584
- US-A- 5 798 426
- US-A1- 2002 001 730
- US-A1- 2007 167 569
- US-A1- 2007 190 333
- US-A1- 2008 145 670
- US-A1- 2008 248 294
- US-A1- 2008 254 308
- US-A1- 2010 108 128
- US-A1- 2010 143 651
- US-B2- 6 663 947

## Description

### FIELD OF THE INVENTION

The invention relates to a multi-layer polymer structure having a polyolefin-based layer, an acrylic-based or other polar polymer layer, and a tie-layer between and adjacent to the polyolefin and polar polymer-based layers. Each layer could contain multiple sub-layers. The invention specifically relates to the composition of the tie-layer used to bond the polyolefin- and the polar polymer layers together. The multilayer structure can contain more than three layers, with polar polymer layers on each side of the polyolefin-based layer, and can be made by any method known to the art. The multilayer structure exhibits excellent structural integrity, excellent surface appearance, high impact strength, high scratch resistance, and excellent resistance to UV rays.

### BACKGROUND OF THE INVENTION

Multi-layered polymeric structures are useful to take advantage of the properties of the different polymers. The multi-layer structures (or sheets) are found in parts used in many industries, including the automotive industry; communications such as telephones, radio, TV, cassettes, etc.; power tools; appliances; business machines; toys; furniture; medical devices, building and construction, etc.. When preparing multilayer structures, the layers of the structures must adhere securely to each other. If the layers of the structure do not adhere to each other a special adhesive or, in other cases, a tie layer may be used to join the layers of the multilayer structure together.

The multilayer structures of the invention may be produced by any methods available in the art, such as by co-extrusion techniques, lamination techniques, thermoforming, injection molding, blow molding, or any combination thereof. Co-extrusion is a process in which two or more molten polymeric compositions are simultaneously extruded through a feedblock die or, alternatively, through a multi-manifold die, to form a laminar structure with different functional properties in each layer. A feedblock die can be used to feed a multi-manifold die in a single process, to provide excellent flexibility in the manufacture of the multilayer structures. Lamination is the process of bonding together prefabricated sheet or film layers, or prefabricated and extruded sheet or film layers, by the use of adhesives, or by a combination of heat and pressure. Alternatively, hot melt lamination or thermal lamination brings two or more molten polymer layers together outside the extrusion die, usually at a nip roll or at the top roll of a roll stack.

Multilayer structures formed by blends of different polymer compositions are known in the prior art. Examples of such multilayer structures include those disclosed in U.S. Pat. Nos. 5,264,280, 5,374,680 and 5,385,781. Generally speaking, these patent references disclose multilayer structures comprising olefinic core layers and cap layers comprising polymers of vinyl aromatic compounds such as polystyrene.

Polyolefin substrate layers, and especially thermoplastic polyolefin (TPO), capped with an acrylic layer provide an excellent combination of the strength and low-cost value of a TPO with the weatherable and appealing appearance of an acrylic cap layer. Unfortunately, non-polar TPO and polar acrylics do not adhere well to each other, and a tie layer must be found that can adhere these layers together. US 6,455,171, US 6,420,050, and US 2008/0220274 disclose multilayer structures which provide the physical properties of an olefinic core layer and the scratch and chemical resistive properties of an acrylic cap layer. The tie layers disclosed are either an olefinic acrylate copolymer, or a block copolymer of vinyl aromatic monomer with aliphatic conjugated diene, partially hydrogenated diene, or olefin monomer. US 7,740,951 discloses a similar olefin-based substrate, an acrylic cap layer, and a tie layer using a blend of a styrenic block copolymer with a vinyl cyanide-containing compound.

Unfortunately, for many applications, none of the described tie-layers, by themselves, result in sufficient adhesion to both olefin and acrylic-based layers, while affording high quality sheet surface. Efforts to optimize such compositions can improve adhesion to one layer, but simultaneously reduce the adhesion to the other layer. Only specific epoxy-functionalized polyolefin-acrylate copolymers have shown satisfactory adhesion to both layers, (US 6,455,171, US 6,420,050, and US 2008/0220274), however the presence of gels in these types of materials resulted in a structure with unacceptable surface appearance.

US 2007/167569 A1 discloses an adhesive blend which serves as tie layer for styrene polymers and articles.

In most cases, the tie-layer compositions of the art provide high adhesion to the polyolefin layer, but a weak adhesion to the acrylic layer. Surprisingly, it has now been found that the addition of selected polymers or oligomers to such tie-layer compositions improves the adhesion to the acrylic or other polar polymer layer, without significantly weakening the adhesion to the polyolefin. Useful polymers or oligomers for use in the tie layer are selected from polydienes, polyolefins, polyesters, acrylics, and styrenics; and these polymers or oligomers can contain functional moieties such as epoxy, carboxylic acid, carboxylate, amine, amide, siloxane, silicone, urethane, and anhydride. The result of using the novel tie layer with the polyolefin and polar polymer layers is a multilayer structure which displays enhanced structural integrity, as well as excellent surface appearance. In addition, a tie layer having a high impact polystyrene, or a copolymer of an olefin with (meth)acrylic acid which can be partially or fully in the salt form can be used as the tie layer of the invention, with or without the addition of the selected polymer or oligomers.

### SUMMARY OF THE INVENTION

The invention relates to a multi-layer thermoformable structure as defined in appended claim 1. Further embodiments are defined in the dependent claims.

### DETAILED DESCRIPTION OF THE INVENTION

The invention relates to a multi-layer polymer structure having a polyolefin-based layer, an acrylic or other polar polymer-based layer, and a tie-layer. The multilayer structure can contain three or more layers, and can be made by any method known to the art. The multilayer structure can have any given geometry, including but not limited to, a flat sheet, a rod, or a profile. The multilayer structure exhibits excellent structural integrity, excellent surface appearance, high impact strength, high scratch resistance, and excellent resistance to UV rays.

### POLYOLEFIN-BASED LAYER

The polyolefin-based layer, herein also referred to as a substrate layer, is thicker than the acrylic based layer(s) and tie layer(s) combined. It could contain one or more different poly olefin layers, though preferably is a single layer. The polyolefins employed in the semicrystalline or crystallizable olefin polymers can be homopolymers, copolymers, terpolymers, or mixtures thereof, etc., containing one or more olefin monomeric units. In a polyolefin-based layer, the polyolefins are generally present in an amount from 30 to 100% by weight, preferably at least 55%, and more preferably at least 60% by weight. The polyolefin of this invention excludes cyclic olefin copolymer (COCs).

Polymers of alpha-olefins or 1-olefins are preferred in the present invention, and these alpha-olefins may contain from 2 to about 20 carbon atoms. Alpha-olefins containing 2 to about 6 carbon atoms are preferred. Thus, the olefin polymers may be derived from olefins such as ethylene, propylene, 1-butene, 1-pentene, 4-methyl-1-pentene, 1-octene, 1-decene, 4-ethyl-1-hexene, etc. Examples of polyolefins include polypropylene, polyethylene, and ethylene propylene copolymers.

In one embodiment, the polyolefins include polypropylene and ethylenepropylene polymers. Propylene polymers may be semi-crystalline or crystalline in structure. The number average molecular weight of the propylene polymers is preferably above about 10,000 and more preferably above about 50,000 as measured by gel permeation chromatography. In addition, it is preferred in one embodiment that the apparent crystalline melting point be above about 75°C. and preferably between about 75° C. and about 250° C. The propylene polymers useful in the present invention are well-known to those skilled in the art and many are available commercially. Polypropylene are the preferred propylene polymers. Thermoplastic polyolefins (TPO) are an especially preferred substrate layer.

In one embodiment, the multilayer structure of the invention contains two or more substrate layers.

### POLAR POLYMER-BASED LAYER

The multilayer structure of this invention contains at least one polar polymer layer. Polar capstock layer polymers include, but are not limited to acrylic-based polymers, styrenic-based polymers, polyesters, polycarbonate, polyvinylidene fluoride, and thermoplastic polyurethane (TPU), or compatible mixtures thereof. Preferred capstock layer polymers are styrenic-based, and acrylic-based polymers.

The acrylic-based layer comprises an acrylic polymer. "Acrylic polymer" as used herein is meant to include polymers, copolymers and terpolymers formed from alkyl methacrylate and alkyl acrylate monomers, and mixtures thereof. The alkyl methacrylate monomer is methyl methacrylate, which makes up from 50 to 100 percent of the monomer mixture. 0 to 50 percent of other acrylate and methacrylate monomers or other ethylenically unsaturated monomers, included but not limited to, styrene, alpha methyl styrene, acrylonitrile, and crosslinkers at low levels may also be present in the monomer mixture. Suitable acrylate and methacrylate comonomers include, but are not limited to, methyl acrylate, ethyl acrylate and ethyl methacrylate, butyl acrylate and butyl methacrylate, iso-octyl methacrylate and acrylate, lauryl acrylate and lauryl methacrylate, stearyl acrylate and stearyl methacrylate, isobornyl acrylate and methacrylate, methoxy ethyl acrylate and methacrylate, 2-ethoxy ethyl acrylate and methacrylate, dimethylamino ethyl acrylate and methacrylate monomers. Alkyl (meth) acrylic acids such as methacrylic acid and acrylic acid can be useful for the monomer mixture. Most preferably the acrylic polymer is a copolymer having 70 - 99.5 weight percent of methyl methacrylate units and from 0.5 to 30 weight percent of one or more C₁₋₈ straight or branched alkyl acrylate units.

In one embodiment, the acrylic polymer has a weight average molecular weight of between 50,000 and 500,000 g/mol, and preferably from 75,000 and 150,000, as measured by gel permeation chromatography. The molecular weight distribution of the acrylic polymer may be monomodal, or multimodal with a polydispersity index greater than 1.5.

In one embodiment, the acrylic polymer contains at least 20% of butyl methacrylate comonomer. In another embodiment, the acrylic-based layer is a blend of an acrylic polymer and 5 to 80 wt%, preferably 10 to 40 wt%, of a polyvinylidene fluoride polymer or copolymer.

Styrenic-based polymers include, but are not limited to, polystyrene, high-impact polystyrene (HIPS), acrylonitrile-butadiene-styrene (ABS) copolymers, acrylonitrile-styrene-acrylate (ASA) copolymers, styrene acrylonitrile (SAN) copolymers, methacrylate-butadiene-styrene (MBS) copolymers, styrene-butadiene copolymers, styrene-butadiene-styrene block (SBS) copolymers and their partially or fully hydrogenenated derivatives, styrene-isoprene copolymers, styrene-isoprene-styrene (SIS) block copolymers and their partially or fully hydrogenenated derivatives, and styrene-(meth)acrylate copolymers such as styrene-methyl methacrylate copolymers (S/MMA). A preferred styrenic polymer is ASA. The styrenic polymers of the invention can be manufactured by means known in the art, including emulsion polymerization, solution polymerization, and suspension polymerization. Styrenic copolymers of the invention have a styrene content of at least 10 percent by weight, preferably at least 25 percent by weight.

In one embodiment, the capstock layer polymer has a weight average molecular weight of between 50,000 and 500,000 g/mol, and preferably from 75,000 and 150,000 g/mol, as measured by gel permeation chromatography (GPC). The molecular weight distribution of the acrylic polymer may be monomodal, or multimodal with a polydispersity index greater than 1.5.

In one embodiment, the multilayer structure of the invention contains two or more polar polymer layers, and two or more tie layers, such as a five- layer structure of polar polymer/tie layer/polyolefin-based polymer/tie layer/polar polymer. In a structure in which multiple polar polymer layers and/or multiple tie layers are used in layers non-adjacent to each other, each of the polar polymer-based layers and tie layers can be of the same of different compositions, though in a preferred embodiment the multiple polar polymer and tie layers are the same. In another embodiment, the polar polymer layer may be composed of two or more polar polymer layers directly in contact with each other. In another embodiment, the tie-layer may be composed of two or more tie layers directly in contact with each other.

### TIE LAYER

"Oligomer" as used herein, is meant to include organic molecules with a weight average molecular weight of 200 g/mol to 20,000 g/mol, as measured by gel permeation chromatrography. "Polymer" as used herein, is meant to include organic molecules with a weight average molecular weight higher than 20,000 g/mol, preferably higher than 50,000 g/mol, as measured by gel permeation chromatrography. "High impact polystyrene" or "HIPS" as used herein, is meant to include polystyrene compounds that contain polybutadiene rubber.

Tie layers useful in the present invention are composed of a blend of A) one or more polymers selected from the groups of olefinic acrylate copolymers, copolymers of olefin and (meth)acrylic acid which can be partially or fully in the salt form, a high impact polystyrene, vinyl cyanide-containing compounds, with B) one or more polymers or oligomers, selected from polyolefins, olefin acrylate copolymers, polydienes, polyesters, acrylics, and styrenics, which can contain functional moieties such as epoxy, carboxylic acid, carboxylate, amine, siloxane, silicone, urethane, amide, anhydride.

Preferably the salt cation is selected from the group of, sodium, potassium, calcium, zinc, lithium, magnesium and barium.

This invention excludes tie-layer composed only of a blend of vinyl cyanide-containing compounds and block copolymers of vinyl aromatic monomer with aliphatic conjugated diene which can be fully or partially hydrogenated and where the dienes can be functionalized, or olefin monomer.

The invention also excludes tie-layer composed only of a blend of (A) an olefin acrylate copolymer that is functionalized with anhydride or unsaturated epoxide functions, and (B) an acrylic polymer or oligomer.

The acrylic or styrenic polymer of B) can be the same or different from the acrylic or styrenic polymer in one of the polar polymer-based layers. Preferably the weight average molecular weight of the polar polymer composition in the tie layer will be equal to or less than the molecular weight of the acrylic in the acrylic-based layer.

The olefin acrylate copolymer of A) can be made by any method known in the art, including but not limited to high pressure autoclaves and tubular reactors, and can have a homogeneous or heterogeneous distribution of compositions and molecular weights.

In one embodiment, B) is an aliphatic polyester, such as polylactic acid.

In another embodiment, B) is an acrylic polymer, preferably an acrylic polymer with a weight average molecular weight lower than 200,000 g/mol, more preferably lower than 100,000 g/mol, and most preferably lower than 80,000 g/mol.

In another embodiment, B) is an acrylic polymer comprising at least 20% of butyl methacrylate as a comonomer.

In another embodiment, B) is a polymeric or oligomeric material than contains covalently bonded functional moieties. Functional moieties include, but are not limited to, epoxy, carboxylic acid, carboxylates, anhydride, amide, siloxane, silicone, urethane, and amino groups. The average weight molecular weight of this material is preferably lower than 20,000 g/mol, more preferably lower than 10,000 g/mol.

In another embodiment, B) is an oligomer of (meth)acrylate and / or styrene, copolymerized with a glycidyl (meth)acrylate or a (meth)acrylic acid monomer (e.g. JONCRYL from BASF).

The functionalized oligomers are intended to be materials that improve adhesion without being too volatile. Functional oligomers includes, for example, an epoxidized C₁₈ olefin.

The ratio of A) to B) in the blend is from 20 - 95 weight percent of A), and preferably 50-85 weight percent, to respectively 5 - 80 weight percent B) and preferably 15 to 50 wt percent.

The above polar polymer-based layers, polyolefin-based layers and tie layers may contain one or more impact modifiers, fillers or fibers, or other additives of the type used in the polymer art. Examples of impact modifiers include, but are not limited to, core-shell particles and block or graft copolymers. Examples of additives include, for example, UV light inhibitors or stabilizers, lubricant agents, heat stabilizers, flame retardants, synergists, pigments and other coloring agents. Examples of fillers employed in a typical compounded polymer blend according to the present invention include talc, calcium carbonate, mica, matting agents, wollastonite, dolomite, glass fibers, boron fibers, carbon fibers, carbon blacks, pigments such as titanium dioxide, or mixtures thereof. Other polymer additives could include polycarbonates, polyurethanes, polysulfones, polyamides, polyolefin including copolymers and terpolymers based on these polymers, and including linear, branched, block, and grafted polymer structures. Examples of matting agents include, but are not limited to, cross-linked polymer particles of various geometries, The amount of filler and additives included in the polymer compositions of each layer may vary from about 0.01% to about 70% of the combined weight of polymer, additives and filler. Generally amounts from about 5% to about 45%, from about 10% to about 40%, are included.

The fillers may be treated with coupling agents to improve the bond between the fillers to the resin. For example, the fillers can be treated with materials such as fatty acids (e.g., stearic acid), silanes, maleated polypropylene, etc. The amount of coupling agent used is an amount effective to improve the bond between the fillers with the resin.

The components of the blend can be combined by means known in the art, including but not limited to dry blending, solvent blending, and melt blending in an extruder. Components A, B, and optionally C can be blended separately with one of the other components, then blended with the other component(s), or all components can be blended together in the same process.

In the multi-layer structure of the invention, the tie layer and polar polymer layers range in thickness from 0.025 to 2.5 mm, and preferably from 0.05 to 1 mm in thickness.

### Manufacture

The multi-layer structure of the invention can contain three or more layers, with the choice of the number and composition of the layers being adjusted to meet the needs of the end-use application. The structure can be made by any method known to the art. This includes separate formation of the layers followed by lamination, coextrusion of all layers - which is preferred, or a combination of coextrusion and lamination.

The planar multilayered polymeric structure of the present invention may be further shaped into a three-dimensional part by any suitable method. Thermoforming, for example, is the process of heating a plastic material in film or sheet form to its particular processing temperature and forming the hot and flexible material against the contours of a mold by mechanical or pneumatic means.

The multilayer structure can have any given geometry, including but not limited to, a flat sheet, a rod, or a profile. The multilayer structure exhibits excellent structural integrity, excellent surface appearance, high impact strength, high scratch resistance, and excellent resistance to UV rays.

### EXAMPLES

**Example 1** - Comparing adhesive strength of coextruded sheet made with tie-layer "A" versus tie-layer "A+B". Three-layer coextrusion was performed using a TPO substrate (Lyondell-Basell E3400), an acrylic capstock (Arkema SOLARKOTE A200) and two different tie-layer materials:
1. 100 wt% ethylene-methyl acrylate copolymer (Arkema LOTRYL 24MA02)
2. 90 wt% ethylene-methyl acrylate copolymer (Arkema LOTRYL 24MA02) + 10 wt% styrene-methacrylic acid oligomer (BASF JONCRYL 3310)

Adhesion of the capstock to the substrate was measured using a 90° peel test per ASTM D6862. The data shows that tie-layer 2, part of this invention, provides peel strength about seven times higher than reference tie-layer 1.

| Tie-layer Material | Peel Strength |
|---|---|
| 1. | 1.9 lbf/in |
| 2. | 13.5 lbf/in |

**Example 2** - Comparing adhesive strength and surface appearance of coextruded sheet made with tie-layer "B" versus tie-layer "A+B". Three-layer coextrusion was performed using a TPO substrate (Mytex METAFORM7200), an acrylic capstock (Arkema SOLARKOTE H300) and two different tie-layer materials:
1. 100 wt% ethylene-methyl acrylate-glycidyl methacrylate copolymer (Arkema LOTADER AX900)
2. 50 wt% ethylene ethylene-methyl acrylate-glycidyl methacrylate copolymer (Arkema LOTADER AX900) + 50 wt% ethylene-methyl acrylate copolymer (Arkema LOTRYL 29MA03)

Adhesion of the capstock to the substrate was measured using a 90° peel test per ASTM D6862. The data below shows that similar peel strength was achieved using both tie-layers. Surface appearance was qualitatively assessed, and tie-layer 1 led to a much larger number of surface defects than tie-layer 2, due to a higher level of glycidyl methacrylate groups, which created undesirable gels through cross-linking reactions. Tie-layer 2, part of this invention, offered similar adhesive strength and superior surface appearance, compared to reference tie-layer 1.

| Tie-layer Material | Peel Strength |
|---|---|
| 1. | 9.37 lbf/in |
| 2. | 9.50 lbf/in |

## Claims

1. A multi-layer thermoformable structure comprising:
a) at least one polyolefin-based substrate layer,
b) at least one polar polymer-based capstock layer having a thickness from 0.025 to 2.5 mm, said polar polymer is selected from the group consisting of acrylic-based polymers consisting of 50 to 100 weight percent of methyl methacrylate monomer and of 0 to 50 weight percent of other acrylate and methacrylate monomers, styrene, alpha methyl styrene, acrylonitrile, and crosslinkers, styrenic-based polymers, polyesters, polycarbonate, polyvinylidene fluoride, and thermoplastic polyurethane (TPU), and compatible mixtures thereof, and
c) at least one tie layer having a thickness from 0.025 to 2.5 mm comprising a blend of, A) one or more polymers selected from the group consisting of olefinic acrylate copolymrs, copolymers of olefin and (meth)acrylic acid which can be partially or fully in the salt form, a high impact polystyrene, and vinyl cyanide-containing compounds and B) one or more polymers or oligomers selected from the group consisting of polydienes, polyolefins, olefin acrylate copolymers, polyesters, acrylics, and styrenics, which contain functional moieties such as epoxy, carboxylic acid, carboxylate, amine, amide, siloxane, silicone, urethane, anhydride,
wherein said tie layer is directly adjacent to, and in between the polyolefin-based layer and the polar polymer based layer, wherein said multi-layer thermoformable structure excludes any tie-layer composed only of a blend of (A) an olefin acrylate copolymer which is functionalized and (B) an acrylic polymer or oligomer, and wherein multi-layer thermoformable structure excludes any tie-layer composed only of a blend of (A) vinyl cyanide-containing compounds, and (B) block copolymers of vinyl aromatic monomer with aliphatic conjugated diene, fully or partially hydrogenated diene, or olefin monomer.

2. The multi-layer thermoformable structure of claim 1, wherein the acrylic polymer of the acrylic-based layer is a copolymer having 70 - 99.5 weight percent of methyl methacrylate units and from 0.5 to 30 weight percent of one or more C₁₋₈ straight or branched alkyl acrylate units.

3. The multi-layer thermoformable structure of claim 1, wherein said polyolefin-based layer is a thermoplastic polyolefin.

4. The multi-layer thermoformable structure of claim 1, wherein said polar polymer-based layer comprises a polar polymer having a weight average molecular weight of between 50,000 and 500,000 g/mol, as measured by gel permeation chromatography.

5. The multi-layer thermoformable structure of claim 2, wherein said acrylic-based polymer comprises an acrylic polymer having at least 20% of butyl methacrylate comonomer units.

6. The multi-layer thermoformable structure of claim 1, wherein said polar polymer-based layer further comprises one or more impact modifiers, fillers, or fibers.

7. The multi-layer thermoformable structure of claim 1, wherein said polar polymer-based layer comprises an acrylic polymer

8. The multi-layer thermoformable structure of claim 1, wherein B) comprises a polyester.

9. The multi-layer thermoformable structure of claim 8, wherein said polyester comprises a polylactic acid.

10. The multi-layer thermoformable structure of claim 1, wherein B) is an acrylic polymer having a weight average molecular weight lower than 200,000g/mol, as measured by gel permeation chromatography.

11. The multi-layer thermoformable structure of claim 1, wherein B) is an acrylic polymer or oligomer having at least 20% of butyl methacrylate comonomer units.

12. The multi-layer thermoformable structure of claim 1, wherein B) is a polyolefin polymer or oligomer functionalized with (meth)acrylic acid units, which can be in the salt form.

13. The multi-layer thermoformable structure of claim 1, wherein B) is a polymeric or oligomeric material that contains covalently bonded functional moieties, selected from the group consisting of epoxy, carboxylic acid, carboxylate, amine, amide, siloxane, silicone, urethane, and anhydride.

14. The multi-layer thermoformable structure of claim 1, wherein B) is an oligomer of (meth)acrylate and/or styrene, copolymerized with a (meth)acrylic acid monomer.

15. The multi-layer thermoformable structure of claim 1, wherein the ratio of A) to B) in the tie-layer blend is from 20/80 to 95/5.

16. The multi-layer thermoformable structure of claim 15 wherein the ratio of A) to B) in the tie-layer blend is from 50/50 to 85/15.

17. The multi-layer thermoformable structure of claim 1, wherein the tie layer has a thickness of from 0.05 to 1 mm, and the acrylic layer has a thickness of from 0.05 to 1 mm.

18. The multi-layer thermoformable structure of claim 1, wherein said polyolefin-based layer comprises at least 30 weight percent of one or more polyolefin materials.

19. The multi-layer thermoformable structure of claim 2, wherein said styrenic-based polymer is selected from the group consisting of polystyrene, high-impact polystyrene (HIPS), acrylonitrile-butadiene-styrene (ABS) copolymers, acrylonitrile-styrene-acrylate (ASA) copolymers, styrene acrylonitrile (SAN) copolymers, methacrylate-butadiene-styrene (MBS) copolymers, styrene-butadiene (SB) copolymers, styrene-butadiene-styrene block (SBS) copolymers and their partially or fully hydrogenenated derivatives, styrene-isoprene copolymers, styrene-isoprene-styrene (SIS) block copolymers and their partially or fully hydrogenenated derivatives, and styrene-methyl methacrylate copolymers (S/MMA).

20. The multi-layer thermoformable structure of claim 2, wherein said styrenic-based polymer comprises acrylonitrile-styrene-acrylate (ASA) copolymers.

21. The multi-layer thermoformable structure of claim 1, wherein said tie-layer comprises at least one copolymer of olefin and (meth)acrylic acid partially or fully in a salt form, wherein said salt form is selected from the group consisting of sodium, potassium, zinc, calcium, magnesium, lithium, or barium salts.

22. The multi-layer thermoformable structure of claim 1, wherein said tie-layer comprises high impact polystyrene.

## Patentansprüche

1. Mehrschichtige thermoformbare Struktur, umfassend:
a) mindestens eine Substratschicht auf Polyolefinbasis,
b) mindestens eine auf polarem Polymer basierende Deckschicht mit einer Dicke von 0,025 bis 2,5 mm, wobei das polare Polymer ausgewählt ist aus der Gruppe bestehend aus Polymeren auf Acrylbasis, die aus 50 bis 100 Gewichtsprozent Methylmethacrylatmonomer und 0 bis 50 Gew.% von anderen Acrylat- und Methacrylatmonomeren, Styrol, alpha-Methylstyrol, Acrylnitril und Vernetzern, Polymeren auf Styrolbasis, Polyestern, Polycarbonat, Polyvinylidenfluorid und thermoplastischem Polyurethan (TPU) sowie kompatiblen Mischungen davon bestehen, und
c) mindestens eine Verbindungsschicht mit einer Dicke von 0,025 bis 2,5 mm, umfassend ein Gemisch von A) einem oder mehreren Polymeren ausgewählt aus der Gruppe bestehend aus olefinischen Acrylatcopolymeren, Copolymeren von Olefin und (Meth)acrylsäure, die teilweise oder vollständig in der Salzform vorliegen kann, einem schlagzähen Polystyrol und Vinylcyanid enthaltenden Verbindungen und B) einem oder mehreren Polymeren oder Oligomeren ausgewählt aus der Gruppe bestehend aus Polydienen, Polyolefinen, Olefin-Acrylat-Copolymeren, Polyestern, Acrylharzen und Styrolharzen, die funktionale Anteile enthalten, wie Epoxy, Carbonsäure, Carboxylat, Amin, Amid, Siloxan, Silikon, Urethan, Anhydrid,
wobei die Verbindungsschicht direkt benachbart zu der Schicht auf Polyolefinbasis und der auf polarem Polymer basierenden Schicht liegt und sich zwischen diesen befindet, wobei die mehrschichtige thermoformbare Struktur jegliche Verbindungsschicht ausschließt, die nur aus einem Gemisch aus (A) einem Olefin-Acrylat-Copolymer, das funktionalisiert ist, und (B) einem Acrylpolymer oder -oligomer zusammengesetzt ist, und wobei die mehrschichtige thermoformbare Struktur jegliche Verbindungsschicht ausschließt, die nur aus einem Gemisch von (A) Vinylcyanid enthaltenden Verbindungen und (B) Blockcopolymeren von vinylaromatischem Monomer mit aliphatischem konjugiertem Dien, vollständig oder teilweise hydriertem Dien oder Olefinmonomer zusammengesetzt ist.

2. Mehrschichtige thermoformbare Struktur nach Anspruch 1, wobei das Acrylpolymer der Schicht auf Acrylbasis ein Copolymer ist, das 70 bis 99,5 Gewichtsprozent Methylmethacrylateinheiten und 0,5 bis 30 Gewichtsprozent von einer oder mehreren geradkettigen oder verzweigten C₁₋₈-Alkylacrylateinheiten aufweist.

3. Mehrschichtige thermoformbare Struktur nach Anspruch 1, wobei die Schicht auf Polyolefinbasis ein thermoplastisches Polyolefin ist.

4. Mehrschichtige thermoformbare Struktur nach Anspruch 1, wobei die auf polarem Polymer basierende Schicht ein polares Polymer mit einem durchschnittlichen Molekulargewicht (Gewichtsmittel) zwischen 50.000 und 500.000 g/mol umfasst, gemessen mittels Gelpermeationschromatographie.

5. Mehrschichtige thermoformbare Struktur nach Anspruch 2, wobei das Polymer auf Acrylbasis ein Acrylpolymer mit mindestens 20 % Butylmethacrylatcomonomereinheiten umfasst.

6. Mehrschichtige thermoformbare Struktur nach Anspruch 1, wobei die auf polarem Polymer basierende Schicht des Weiteren einen oder mehrere Schlagzähigkeitsverbesserer, Füllstoffe oder Fasern umfasst.

7. Mehrschichtige thermoformbare Struktur nach Anspruch 1, wobei die auf polarem Polymer basierende Schicht ein Acrylpolymer umfasst.

8. Mehrschichtige thermoformbare Struktur nach Anspruch 1, wobei B) einen Polyester umfasst.

9. Mehrschichtige thermoformbare Struktur nach Anspruch 8, wobei der Polyester eine Polymilchsäure umfasst.

10. Mehrschichtige thermoformbare Struktur nach Anspruch 1, wobei B) ein Acrylpolymer mit einem durchschnittlichen Molekulargewicht (Gewichtsmittel) von weniger als 200.000 g/mol ist, gemessen mittels Gelpermeationschromatographie.

11. Mehrschichtige thermoformbare Struktur nach Anspruch 1, wobei B) ein Acrylpolymer oder -oligomer mit mindestens 20 % Butylmethacrylatcomonomereinheiten ist.

12. Mehrschichtige thermoformbare Struktur nach Anspruch 1, wobei B) ein Polyolefinpolymer oder -oligomer ist, das mit (Meth)acrylsäureeinheiten funktionalisiert ist, die in der Salzform vorliegen können.

13. Mehrschichtige thermoformbare Struktur nach Anspruch 1, wobei B) ein polymeres oder oligomeres Material ist, das kovalent gebundene funktionale Anteile enthält, die ausgewählt sind aus der Gruppe bestehend aus Epoxy, Carbonsäure, Carboxylat, Amin, Amid, Siloxan, Silikon, Urethan und Anhydrid.

14. Mehrschichtige thermoformbare Struktur nach Anspruch 1, wobei B) ein Oligomer von (Meth)acrylat und/oder Styrol ist, copolymerisiert mit einem (Meth)acrylsäuremonomer.

15. Mehrschichtige thermoformbare Struktur nach Anspruch 1, wobei das Verhältnis von A) zu B) in dem Verbindungsschichtgemisch 20/80 bis 95/5 beträgt.

16. Mehrschichtige thermoformbare Struktur nach Anspruch 15, wobei das Verhältnis von A) zu B) in dem Verbindungsschichtgemisch 50/50 bis 85/15 beträgt.

17. Mehrschichtige thermoformbare Struktur nach Anspruch 1, wobei die Verbindungsschicht eine Dicke von 0,05 bis 1 mm aufweist und die Acrylschicht eine Dicke von 0,05 bis 1 mm aufweist.

18. Mehrschichtige thermoformbare Struktur nach Anspruch 1, wobei die Schicht auf Polyolefinbasis mindestens 30 Gewichtsprozent von einem oder mehreren Polyolefinmaterialien umfasst.

19. Mehrschichtige thermoformbare Struktur nach Anspruch 2, wobei das Polymer auf Styrolbasis ausgewählt ist aus der Gruppe bestehend aus Polystyrol, schlagzähem Polystyrol (HIPS), Acrylnitril-Butadien-Styrol(ABS)-Copolymeren, Acrylnitril-Styrol-Acrylat(ASA) Copolymeren, Styrol-Acrylnitril(SAN)-Copolymeren, Methacrylat-Butadien-Styrol(MBS)-Copolymeren, Styrol-Butadien(SB)-Copolymeren, StyrolButadien-Styrol(SBS)-Blockcopolymeren und deren teilweise oder vollständig hydrierten Derivaten, Styrol-Isopren-Copolymeren, Styrol-Isopren-Styrol(SIS)-Blockcopolymeren und deren teilweise oder vollständig hydrierten Derivaten, und Styrol-Methylmethacrylat-Copolymeren (S/MMA).

20. Mehrschichtige thermoformbare Struktur nach Anspruch 2, wobei das Polymer auf Styrolbasis Acrylnitril-Styrol-Acrylat(ASA)-Copolymere umfasst.

21. Mehrschichtige thermoformbare Struktur nach Anspruch 1, wobei die Verbindungsschicht mindestens ein Copolymer von Olefin und (Meth)acrylsäure umfasst, das teilweise oder vollständig in einer Salzform vorliegt, wobei die Salzform ausgewählt ist aus der Gruppe bestehend aus Natrium-, Kalium-, Zink-, Calcium-, Magnesium-, Lithium- oder Bariumsalzen.

22. Mehrschichtige thermoformbare Struktur nach Anspruch 1, wobei die Verbindungsschicht schlagzähes Polystyrol umfasst.

## Revendications

1. Structure thermoformable multicouche comprenant :
a) au moins une couche de substrat à base de polyoléfine,
b) au moins une couche de résine capstock à base de polymère polaire ayant une épaisseur de 0,025 à 2,5 mm, ledit polymère polaire étant choisi dans le groupe constitué par les polymères à base d'acrylique constitués de 50 à 100 pour cent en poids de monomère méthacrylate de méthyle et de 0 à 50 pour cent en poids d'autres monomères acrylates et méthacrylates, de styrène, d'alpha-méthylstyrène, d'acrylonitrile et d'agents de réticulation, les polymères à base de styrénique, les polyesters, le polycarbonate, le poly(fluorure de vinylidène) et le polyuréthane thermoplastique (TPU) et les mélanges compatibles de ceux-ci, et
c) au moins une couche de liaison ayant une épaisseur de 0,025 à 2,5 mm comprenant un mélange de
A) un ou plusieurs polymères choisis dans le groupe constitué par les copolymères d'acrylate oléfiniques, les copolymères d'oléfine et d'acide (méth)acrylique qui peuvent être en partie ou en totalité sous la forme de sel, un polystyrène choc et les composés contenant du cyanure de vinyle et
B) un ou plusieurs polymères ou oligomères choisis dans le groupe constitué par les polydiènes, les polyoléfines, les copolymères d'oléfine et d'acrylate, les polyesters, les acryliques et les styréniques, qui contiennent des fractions fonctionnelles telles que des fractions époxy, acide carboxylique, carboxylate, amine, amide, siloxane, silicone, uréthane, anhydride,
dans laquelle ladite couche de liaison est directement adjacente à la couche à base de polyoléfine et à la couche à base de polymère polaire et entre celles-ci, ladite structure thermoformable multicouche excluant une quelconque couche de liaison composée uniquement d'un mélange de (A) un copolymère d'oléfine et d'acrylate qui est fonctionnalisé et (B) un polymère ou oligomère acrylique et la structure thermoformable multicouche excluant une quelconque couche de liaison composée uniquement d'un mélange de (A) des composés contenant du cyanure de vinyle et (B) des copolymères séquencés de monomère vinylique aromatique avec un diène conjugué aliphatique, un diène totalement ou partiellement hydrogéné ou un monomère oléfinique.

2. Structure thermoformable multicouche selon la revendication 1, dans laquelle le polymère acrylique de la couche à base d'acrylique est un copolymère ayant 70-99,5 pour cent en poids de motifs méthacrylate de méthyle et de 0,5 à 30 pour cent en poids d'un ou plusieurs motifs acrylate d'alkyle droit ou ramifié en C₁₋₈.

3. Structure thermoformable multicouche selon la revendication 1, dans laquelle ladite couche à base de polyoléfine est une polyoléfine thermoplastique.

4. Structure thermoformable multicouche selon la revendication 1, dans laquelle ladite couche à base de polymère polaire comprend un polymère polaire ayant une masse moléculaire moyenne en poids, telle que mesurée par chromatographie par perméation de gel, comprise entre 50 000 et 500 000 g/mol.

5. Structure thermoformable multicouche selon la revendication 2, dans laquelle ledit polymère à base d'acrylique comprend un polymère acrylique ayant au moins 20 % de motifs comonomères méthacrylate de butyle.

6. Structure thermoformable multicouche selon la revendication 1, dans laquelle ladite couche à base de polymère polaire comprend en outre un ou plusieurs modificateurs de la résistance au choc, charges ou fibres.

7. Structure thermoformable multicouche selon la revendication 1, dans laquelle ladite couche à base de polymère polaire comprend un polymère acrylique.

8. Structure thermoformable multicouche selon la revendication 1, dans laquelle B) comprend un polyester.

9. Structure thermoformable multicouche selon la revendication 8, dans laquelle ledit polyester comprend un poly(acide lactique).

10. Structure thermoformable multicouche selon la revendication 1, dans laquelle B) est un polymère acrylique ayant une masse moléculaire moyenne en poids, telle que mesurée par chromatographie par perméation de gel, inférieure à 200 000 g/mol.

11. Structure thermoformable multicouche selon la revendication 1, dans laquelle B) est un polymère ou oligomère acrylique ayant au moins 20 % de motifs comonomères méthacrylate de butyle.

12. Structure thermoformable multicouche selon la revendication 1, dans laquelle B) est un polymère ou oligomère polyoléfinique fonctionnalisé avec des motifs acide (méth)acrylique, qui peuvent être sous la forme de sel.

13. Structure thermoformable multicouche selon la revendication 1, dans laquelle B) est une matière polymère ou oligomère qui contient des fractions fonctionnelles liées de manière covalente, choisies dans le groupe constitué par les fractions époxy, acide carboxylique, carboxylate, amine, amide, siloxane, silicone, uréthane et anhydride.

14. Structure thermoformable multicouche selon la revendication 1, dans laquelle B) est un oligomère de (méth)acrylate et/ou de styrène, copolymérisés avec un monomère acide (méth)acrylique.

15. Structure thermoformable multicouche selon la revendication 1, dans laquelle le rapport de A) à B) dans le mélange de la couche de liaison est de 20/80 à 95/5.

16. Structure thermoformable multicouche selon la revendication 15 dans laquelle le rapport de A) à B) dans le mélange de la couche de liaison est de 50/50 à 85/15.

17. Structure thermoformable multicouche selon la revendication 1, dans laquelle la couche de liaison a une épaisseur de 0,05 à 1 mm et la couche acrylique a une épaisseur de 0,05 à 1 mm.

18. Structure thermoformable multicouche selon la revendication 1, dans laquelle ladite couche à base de polyoléfine comprend au moins 30 pour cent en poids d'une ou plusieurs matières polyoléfiniques.

19. Structure thermoformable multicouche selon la revendication 2, dans laquelle ledit polymère à base de styrénique est choisi dans le groupe constitué par le polystyrène, le polystyrène choc (HIPS), les copolymères d'acrylonitrile-butadiène-styrène (ABS), les copolymères d'acrylonitrile-styrène-acrylate (ASA), les copolymères de styrène-acrylonitrile (SAN), les copolymères de méthacrylate-butadiène-styrène (MBS), les copolymères de styrène-butadiène (SB), les copolymères séquencés de styrène-butadiène-styrène (SBS) et leurs dérivés partiellement ou totalement hydrogénés, les copolymères de styrène-isoprène, les copolymères séquencés de styrène-isoprène-styrène (SIS) et leurs dérivés partiellement ou totalement hydrogénés et les copolymères de styrène-méthacrylate de méthyle (S/MMA).

20. Structure thermoformable multicouche selon la revendication 2, dans laquelle ledit polymère à base de styrénique comprend des copolymères d'acrylonitrile-styrène-acrylate (ASA).

21. Structure thermoformable multicouche selon la revendication 1, dans laquelle ladite couche de liaison comprend au moins un copolymère d'oléfine et d'acide (méth)acrylique en partie ou en totalité sous une forme de sel, ladite forme de sel étant choisie dans le groupe constitué par les sels de sodium, de potassium, de zinc, de calcium, de magnésium, de lithium ou de baryum.

22. Structure thermoformable multicouche selon la revendication 1, dans laquelle ladite couche de liaison comprend du polystyrène choc.
